# FASCICULE DE BREVET EUROPEEN

(11) **EP 2 353 467 B1**
(45) Date de publication et mention de la délivrance du brevet: **14.11.2012**
(21) Numéro de dépôt: 11153080.4
(22) Date de dépôt: 02.02.2011
(51) Int. Cl.: A47J 27/05

(54) **Récipient de cuisson pour mise sous vide**
Randverbindungselement für eine erste und zweite Kochplatte
Edge-joining device for a first and second cooking plate

(30) Priorité: 04.02.2010 FR 1050787
(43) Date de publication de la demande: 10.08.2011
(73) Titulaire: Meledo, M. Hervé, 44240 Suce sur Erdre (FR)
(72) Inventeur: Meledo, M. Hervé, 44240 Suce sur Erdre (FR)
(74) Mandataire: Delorme, Nicolas

(56) Documents cités:
- CH-A- 330 764
- FR-A- 1 119 395
- FR-A1- 2 719 882
- FR-A1- 2 838 038
- US-A1- 2003 167 932
- US-A1- 2004 112 372

## Description

La présente invention se rapporte à un récipient de cuisson ainsi qu'à un procédé de cuisson à la vapeur utilisant un tel récipient. Plus précisément, la présente invention se rapporte à un récipient de cuisson à la vapeur.

On connaît par le document FR 2 719 882 A1 un joint d'étanchéité qui permet d'avoir une jonction étanche entre les éléments d'un ustensile de cuisine.

La cuisson à la vapeur est un mode de cuisson utilisant la chaleur dégagée par la vapeur d'un liquide en ébullition, généralement de l'eau. Ce mode de cuisson nécessite une enceinte de cuisson fermée afin de confiner la vapeur d'eau. Ce mode de cuisson, faiblement agressif, permet de préserver les qualités nutritives et aromatiques essentielles des aliments. Cependant, un tel mode de cuisson nécessite une ébullition de l'eau proche ou dépassant les 100°C pouvant détruire par exemple certaines vitamines et/ou oligo-éléments présents dans les aliments tels que la vitamine C qui commence à être détruite à partir de 60°C.

La présente invention vise à remédier à l'inconvénient précité et concerne un récipient de cuisson remarquable en ce qu'il comporte :
- des premier et second plats de cuisson formant une enceinte de cuisson fermée, et présentant chacun un bord d'extrémité libre,
- un organe de jonction bord à bord des premier et second plats de cuisson, chaque bord d'extrémité libre comprenant une pièce de raccordement à l'organe de jonction configurée pour rendre étanche la jonction entre le bord d'extrémité libre correspondant et l'organe de jonction, l'organe de jonction étant configuré de sorte qu'il s'emboîte entre les bords d'extrémité libres,
- un orifice conçu pour autoriser le pompage à vide du récipient de cuisson.

Ainsi, la mise sous vide du récipient de cuisson permet de réduire la pression de l'air à l'intérieur du récipient et par là-même de réduire la température d'ébullition de l'eau pour une cuisson à la vapeur, conformément au diagramme de phase de l'eau. Cette réduction de la température d'ébullition de l'eau permet d'améliorer la préservation de la composition des aliments.

En outre, de telles pièces de raccordement permettent de faciliter la mise sous vide du récipient et permettent de compenser une disparité géométrique des premier et second plats.

Dans un mode de réalisation, l'orifice est ménagé dans l'organe de jonction.

Selon une forme d'exécution, l'orifice est destiné à recevoir un tuyau de pompe à vide.

Avantageusement, l'organe de jonction et chaque pièce de raccordement sont réalisés dans un matériau isolant thermiquement.

Ainsi, le récipient de cuisson peut être manipulé sans risques de brûlures.

Avantageusement, le matériau isolant thermiquement est un plastique alimentaire tel que le propylène.

Ainsi, l'organe de jonction et chaque pièce de raccordement peuvent être au contact d'un aliment sans risque de le contaminer.

Dans un mode de réalisation, chaque pièce de raccordement est pourvue d'un joint d'étanchéité.

Selon une forme d'exécution, le joint d'étanchéité de chaque pièce de raccordement est conformé pour coopérer par complémentarité de forme avec l'anneau de jonction.

Préférentiellement, les plats de cuisson sont réalisés dans un matériau autorisant la propagation d'un rayonnement infrarouge, par exemple le verre.

La présente invention se rapporte également à un procédé de cuisson à la vapeur remarquable en ce qu'il comporte les étapes consistant à :
- a) fournir un récipient de cuisson conforme à l'invention,
- b) disposer le récipient de cuisson dans un four de cuisson de préférence par infrarouge,
- c) connecter une pompe à vide à l'orifice du récipient de cuisson.

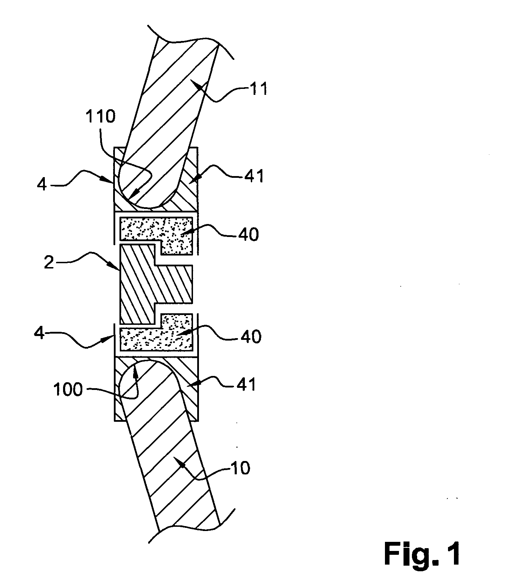

D'autres caractéristiques et avantages apparaîtront dans la description qui va suivre d'un mode de réalisation d'un récipient de cuisson selon l'invention, donné à titre d'exemple non limitatif, en référence aux dessins annexés dans lesquels la figure 1 est une vue éclatée partielle en coupe d'un récipient de cuisson selon l'invention.

Le récipient de cuisson illustré à la figure 1 comporte des premier et second plats 10, 11 de cuisson formant une enceinte de cuisson fermée. Chacun des premier et second plats 10, 11 de cuisson présente un bord d'extrémité libre 100, 110. Les premier et second plats 10, 11 de cuisson peuvent être disposé dans un four de cuisson (non représenté) par infrarouge. A cet effet, les premier et second plats 10, 11 peuvent être réalisés dans un matériau autorisant la propagation d'un rayonnement infrarouge, par exemple le verre.

Le récipient de cuisson comporte un organe de jonction 2 bord à bord des premier et second plats 10, 11 de cuisson. L'organe de jonction 2 est de préférence de forme annulaire. L'organe de jonction 2 présente une section transversale sensiblement en forme de T. Par « transversale », on entend une direction perpendiculaire à une direction s'étendant suivant la longueur d'un plat 10, 11.

Chaque bord d'extrémité libre 100, 110 comprend une pièce de raccordement 4 à l'organe de jonction 2 configurée pour rendre étanche la jonction entre le bord d'extrémité libre 100, 110 correspondant et l'organe de jonction 2. Les pièces de raccordement 4 sont fixées à chaque bord d'extrémité libre 100, 110 par une colle 41 en vue d'un scellement permanent entre le bord d'extrémité libre 100, 110 correspondant et la pièce de raccordement 4 correspondante. Chaque pièce de raccordement 4 est pourvue d'un joint d'étanchéité 40. Chaque joint d'étanchéité 40 est de préférence de forme annulaire. Chaque joint d'étanchéité 40 est de préférence réalisé en silicone. Chaque joint d'étanchéité 40 présente une section transversale sensiblement en forme de L conformée pour coopérer par complémentarité de forme avec l'organe de jonction 2.

L'organe de jonction 2 est configuré de sorte qu'il s'emboîte entre les bords d'extrémité libres 100, 110, une fois les bords d'extrémité libres 100, 110 scellés avec les pièces de raccordement 4.

Le récipient de cuisson comporte un orifice (non représenté) conçu pour autoriser le pompage à vide du récipient de cuisson. L'orifice est de préférence ménagé dans l'organe de jonction 2. L'orifice est destiné à recevoir un tuyau de pompe à vide (non représenté).

Par ailleurs, l'organe de jonction 2 ou les pièces de raccordement 4 peuvent être munies d'au moins une poignée (non représentée) afin de faciliter la manipulation du récipient de cuisson.

L'organe de jonction 2 et chaque pièce de raccordement 4 peuvent être réalisés dans un matériau isolant thermiquement. Le matériau isolant thermiquement est un plastique alimentaire tel que le propylène.

Bien entendu, le mode de réalisation de l'invention décrit ci-dessus ne présente aucun caractère limitatif. Des détails et améliorations peuvent y être apportés dans d'autres variantes d'exécution sans pour autant sortir du cadre de l'invention.

## Revendications

1. Récipient de cuisson comportant :
- des premier et second plats (10, 11) de cuisson formant une enceinte de cuisson fermée, et présentant chacun un bord d'extrémité libre (100,110),
- un organe de jonction (2) bord à bord des premier et second plats (10, 11) de cuisson, chaque bord d'extrémité libre (100, 110) comprenant une pièce de raccordement (4) à l'organe de jonction (2) configurée pour rendre étanche la jonction entre le bord d'extrémité libre (100, 110) correspondant et l'organe de jonction (2), l'organe de jonction (2) étant configuré de sorte qu'il s'emboîte entre les bords d'extrémité libres (100, 110),
**caractérisé en ce qu'**il comporte :
- un orifice conçu pour autoriser le pompage à vide du récipient de cuisson.

2. Récipient de cuisson selon la revendication 1, **caractérisé en ce que** l'orifice est ménagé dans l'organe de jonction (2).

3. Récipient de cuisson selon les revendications 1 ou 2, **caractérisé en ce que** l'orifice est destiné à recevoir un tuyau de pompe à vide.

4. Récipient de cuisson selon l'une des revendications 1 à 3, **caractérisé en ce que** l'organe de jonction (2) et chaque pièce de raccordement (4) sont réalisés dans un matériau isolant thermiquement.

5. Récipient de cuisson selon la revendication 4, **caractérisé en ce que** le matériau isolant thermiquement est un plastique alimentaire tel que le propylène.

6. Récipient de cuisson selon l'une des revendications 1 à 5, **caractérisé en ce que** chaque pièce de raccordement (4) est pourvue d'un joint d'étanchéité (40).

7. Récipient de cuisson selon la revendication 6, **caractérisé en ce que** le joint d'étanchéité (40) de chaque pièce de raccordement (4) est conformé pour coopérer par complémentarité de forme avec l'anneau de jonction (2).

8. Procédé de cuisson à la vapeur **caractérisé en ce qu'**il comporte les étapes consistant à :
- a) fournir un récipient de cuisson selon l'une des revendications 1 à 7,
- b) disposer le récipient de cuisson dans un four de cuisson de préférence par infrarouge,
- c) connecter une pompe à vide à l'orifice du récipient de cuisson.

## Claims

1. A cooking vessel comprising:
- first and second cooking plates (10, 11) forming a closed cooking enclosure, and each having a free end edge (100, 110),
- an edge-joining member (2) for the first and second cooking plates (10, 11), each free end edge (100, 110) comprising a connecting piece (4) for connecting to the joining member (2) configured to seal the joint between the corresponding free end edge (100, 110) and the joining member (2), the joining member (2) being configured such that it interlocks between the free end edges (100, 110),
**characterized in that** it includes:
- an opening designed to allow vacuum pumping of the cooking vessel.

2. The cooking vessel according to claim 1, **characterized in that** the opening is formed in the joining member (2).

3. The cooking vessel according to claims 1 or 2, **characterized in that** the opening is intended to receive a vacuum pump hose.

4. The cooking vessel according to one of claims 1 to 3, **characterized in that** the joining member (2) and each connecting piece (4) are made from a thermally insulating material.

5. The cooking vessel according to claim 4, **characterized in that** the thermally insulating material is a food-grade plastic such as propylene.

6. The cooking vessel according to one of claims 1 to 5, **characterized in that** each connecting piece (4) is provided with a sealing device (40).

7. The cooking vessel according to claim 6, **characterized in that** the sealing device (40) of each connecting piece (4) is configured to cooperate with the junction ring (2) by shape matching.

8. A steam cooking method, **characterized in that** it comprises the following steps:
- a) providing a cooking vessel according to one of claims 1 to 7,
- b) arranging the cooking vessel in a baking oven, preferably using infrared,
- c) connecting a vacuum pump to the opening of the cooking vessel.

## Patentansprüche

1. Gargefäß, aufweisend:
- eine erste und zweite Kochplatte (10, 11), die einen geschlossenen Garbereich bilden und jeweils einen freien Endrand (100, 110) aufweisen,
- ein Randverbindungsorgan (2) der ersten und zweiten Kochplatte(10, 11), wobei jeder freie Endrand (100, 110) ein Anschlussteil (4) an das Verbindungsorgan (2) umfasst, das konfiguriert ist, um den Anschluss zwischen dem entsprechenden freien Endrand (100, 110) und dem Verbindungsorgan (2) abzudichten, wobei das Verbindungsorgan (2) derart konfiguriert ist, dass es zwischen die freien Endränder (100, 110) rastet,
**dadurch gekennzeichnet, dass** es aufweist:
- eine Öffnung, um das Vakuumpumpen des Gargefäßes zu erlauben.

2. Gargefäß nach Anspruch 1, **dadurch gekennzeichnet, dass** die Öffnung in das Verbindungsorgan (2) eingearbeitet ist.

3. Gargefäß nach den Ansprüchen 1 oder 2, **dadurch gekennzeichnet, dass** die Öffnung zur Aufnahme eines Rohrs einer Vakuumpumpe bestimmt ist.

4. Gargefäß nach einem der Ansprüche 1 bis 3, **dadurch gekennzeichnet, dass** das Verbindungsorgan (2) und jedes Anschlussteil (4) aus einem thermisch isolierenden Material hergestellt sind.

5. Gargefäß nach Anspruch 4, **dadurch gekennzeichnet, dass** das thermisch isolierende Material ein Lebensmittelkunststoff wie Propylen ist.

6. Gargefäß nach einem der Ansprüche 1 bis 5, **dadurch gekennzeichnet, dass** jedes Anschlussteil (4) mit einer Dichtung (40) ausgestattet ist.

7. Gargefäß nach Anspruch 6, **dadurch gekennzeichnet, dass** die Dichtung (40) jedes Anschlussteils (4) ausgebildet ist, um durch Formkomplementarität mit dem Verbindungsring (2) zusammenzuarbeiten.

8. Dampfgarverfahren, **dadurch gekennzeichnet, dass** es die Schritte umfasst, die darin bestehen:
a) Bereitstellen eines Gargefäßes nach einem der Ansprüche 1 bis 7,
b) Anordnen des Gargefäßes in einem vorzugsweise Infrarot-Garofen,
c) Anschließen einer Vakuumpumpe an die Öffnung des Gargefäßes.
